# EUROPEAN PATENT SPECIFICATION

(11) **EP 2 530 556 B1**
(45) Date of publication and mention of the grant of the patent: **29.06.2016**
(21) Application number: 12170032.2
(22) Date of filing: 30.05.2012
(51) Int. Cl.: G06F 1/16

(54) **Display device with flexible display**
Anzeigevorrichtung mit flexibler Anzeige
Dispositif d'affichage à affichage flexible

(30) Priority: 30.05.2011 NL 2006862
(43) Date of publication of application: 05.12.2012
(73) Proprietor: Samsung Electronics Co., Ltd., Gyeonggi-do 16677 (KR)
(72) Inventor: Hamers, Johannes, 5616 LZ Eindhoven (NL); Walters, Michaël, 5616 LZ Eindhoven (NL); Van Dijk, Robèrt, 5616 LZ Eindhoven (NL)
(74) Representative: HGF Limited

(56) References cited:
- WO-A1-2009/131447
- WO-A2-2008/054206
- US-A1- 2006 006 674
- US-A1- 2008 278 269
- US-A1- 2010 182 518
- US-A1- 2010 208 417

## Description

### Field of invention

The present invention generally relates to display devices with a flexible display. The present invention specifically relates to display devices of the kind comprising a device body, a continuous flexible display, an elongated support frame configured to support the flexible display, being provided with mutually movable connected frame portions and being hingeably connected at a first end to the device body between a closed configuration for fixing the flexible display in a wrapped storage position with respect to the device body and an open configuration for fixing the flexible display in an unwrapped open position,

### Description of prior art

Mobile display devices, such as mobile phones or e-readers, which make use of flexible displays have in their storage position a compact state, for instance for transportation, previewing or phone calls. In the open position they are in a reading/viewing state with the continuous flexible display in extended position supported by an elongated support frame.

A number of product concepts have been developed for devices with flexible displays. One of the most important concepts is the 'wrap'. An example of a 'wrap' concept is shown in WO 2008/054206 A2 and WO 2009/131447 A1. When the flexible display is wrapped for the storage position this is done with its front side to the body. The reason is that the display is better protected this way when the device is not in use. In the storage position the support frame of this 'wrap' type display is closed and locked by mechanical means, requiring a special handling which in practice, in combination with the handling for opening, is user unfriendly.

An electronic device with a flexible wrapable display is disclosed in US 2010/0208417 A1. Hinges that incorporate an elastic material are provided to allow a bi-stable or multi-stable arrangement between displaceable parts of the electronic device.

United States patent application US 2006/0006674 A1 discloses a mechanism using a magnetic dipole to open and close the lid of a laptop device. A similar configuration is disclosed in US 2008/0278269 A1. United States patent application US 2010/0182518 A1 discloses a mug with a wrappable visual display on the outer surface.

The use of closing means for a 'wrap' type display device applying magnetic force is difficult because the device design is very lightweight and flexible resulting in deformation of the frame portions when opening the device. Another problem is the exact position and angle of the magnet that is required for an optimal closing force. This demand for a precise position and angle is required in order to let the magnetic fields couple most optimal with the metal or magnetic counter part. The use of a stronger magnet to compensate for less accuracy is not an option since this could result in the magnet erasing bank cards when they are close to the display device.

It is an object of the invention to create a user friendly closing, locking and opening of a 'wrap' type flexible display.

### Disclosure of the invention

According to the invention the display device comprises magnetic closing means being provided with a first locking part being movably connected to a major part of the support frame, said magnetic closing means being capable of magnetically locking a second end of the support frame in the closed configuration to the device body and being provided with at least one unlocking member enabling a manual unlocking of said second end of the support frame from the device body.

Preferably the magnetic closing means with its locking part can relatively freely move in the closed configuration with respect to the support frame and as such it can find the optimal locking position, where the magnetic field of the used magnet is coupled most optimal with its static counterpart (metal or magnet) and as such is also able to compensate for mechanical inaccuracies resulting e.g. from assembly or wear in the support frame with its movable frame portion and its hinge connection with the device body. At the same time the at least one unlocking member allows the user to unlock and turn the magnet away from its counterpart so breaking the magnetic coupling and resulting in opening the support frame and the flexible display with little force. It is noted that the magnet may be an integrated portion of the locking part or of the counterpart located on the device body.

According to a preferred embodiment of the invention said first locking part is pivotably connected to the second end of the support frame, the pivot axis of the connection being located substantially parallel to the hinge axis in the connection of the first end of the support frame with the device body.

Thus the magnet is assembled on the locking part that can relatively freely pivot around the pivot axis located parallel to the hinge axis in the connection of the first end of the support frame with the device body to find a position where the magnetic field of the magnet is coupled most optimal with its static counterpart (metal or magnet) also able to compensate for support frame assembly or other mechanical inaccuracies.

According to another preferred embodiment of the invention said first locking part is connected by a ball hinge with the second end of the support frame. The ball hinge enables that the locking part can relative freely move in its connection with the second end of the support frame to find a position where the magnetic field of the magnet is coupled most optimal with its static counterpart (metal or magnet). The ball hinge also enables a good compensation for support frame mechanical inaccuracies resulting e.g. from assembly or wear.

According to still another preferred embodiment of the invention the unlocking member comprises a grip portion. The grip portion allows the user to turn the magnet away from its counterpart so breaking the magnetic locking and resulting in opening the support frame with little force.

### Brief description of the drawings

Fig.1a shows a schematic side view of a 'wrap' type device in accordance with the invention in a position during the movement to the storage position;
Fig.1b shows a detail of fig.1a with a part of the magnetic closing means and its connection to the support frame;
Fig.2 shows a schematic side view of another 'wrap' device embodiment in accordance with the invention in the storage position;
Fig.3 shows a schematic side view of still another 'wrap' device embodiment in accordance with the invention in the storage position;
Fig.4a shows a perspective view of part of another 'wrap' device embodiment with the magnetic closing means in the closed position;
Fig.4b shows a schematic side view of part of the 'wrap' device embodiment of fig.4a.

### Description of the embodiments

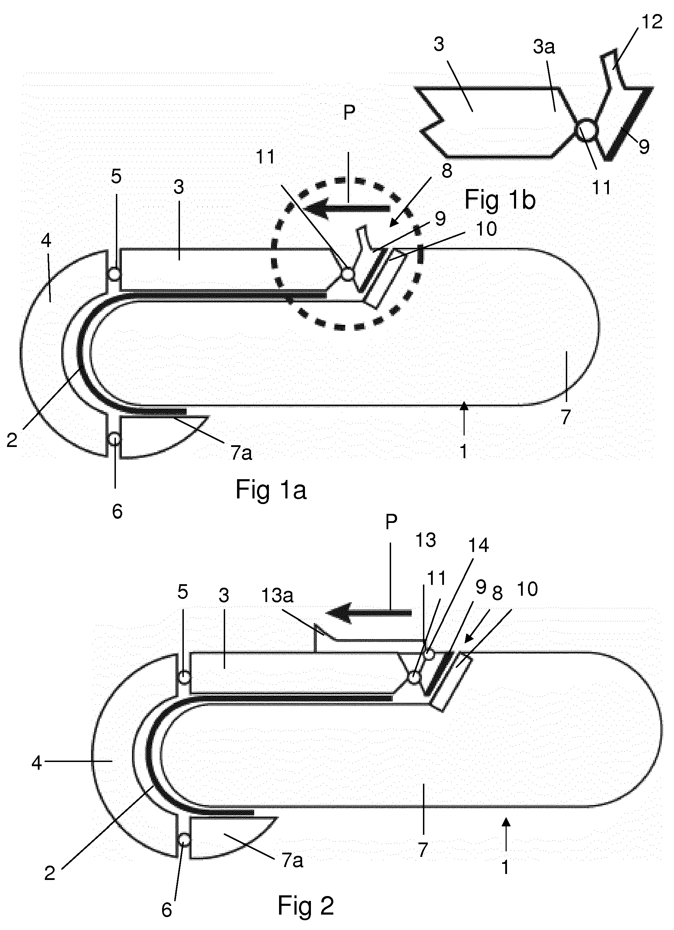

The display device 1 schematically shown in fig.1a and 1b is a 'wrap' type device of the kind disclosed in WO 2008/054206 A2. It comprises a continuous flexible display 2 and an elongated display support frame comprising two support frame portions 3, 4. These portions 3, 4 are connected via hinge parts 5, 6 at a first end 7a with a wrap body 7 and are each structurally configured to support a respective portion of the flexible display 2. The two support frame portions are movable between a closed storage position and a planar configuration with the flexible display in an open position. When the flexible display 2 is wrapped to the storage position this is done with its front side to the body 7 and so the display is protected when the device is not in use. The device 1 is provided with magnetic closing means 8 having a first locking part 9 which is movable connected with a second end 3a of the support frame and cooperates for locking with a counterpart 10. Via the connection with the second end 3a the first locking part 9 is movable with respect to a major part of the support frame. In the shown embodiment the part 9 comprises magnetic material and the part 10 metal. Alternatively, part 9 comprises metal and part 10 magnetic material or both parts 9 and 10 comprise magnetic material.
In the movable connection of the part 9 with the second end 3a is located a pivot axis 11 (fig.1b) being located substantially parallel to the hinge axis in the hinge parts 5, 6 in the connection of the first end 7a of the support frame 3,4 with the device body 7.
Alternatively (not shown) the first locking part 9 is connected by a ball hinge with the second end 3a of the support frame.
Alternatively (not shown) the first locking part 9 is connected with the second end 3a of the support frame by flexible movement damping material such as soft rubber or thinned plastic.
By the first locking part 9 the closing means 8 are capable of magnetically locking the second end 3a of the support frame in the closed configuration to the device body 7. The locking part 9 is provided with at least one unlocking member for a manual unlocking of the second end 3a from the device body. In the embodiment of fig. 1 the unlocking member comprises a grip portion 12.

By the relatively free movable connection in the embodiment of fig.1 of the locking part 9 with the support frame by means of a pivot, a ball hinge or flexible movement damping material, at the end of the closing movement of the support frame around the body 7 the part 9 can find its optimal position with respect to the static counterpart 10. This results in an optimal coupling closing and locking force of the magnetic closing means 8 and allows the use of a relatively "weak" magnet. This movable connection is also able to compensate for mechanical inaccuracies resulting e.g. from assembly or wear. At the same time for unlocking the construction of the magnetic closing means 8 allows the user to pull the grip or hook portion 12 that turns the part 9 away from its counterpart 10 in the direction of the arrow P so unlocking and breaking the magnetic coupling and resulting in opening the support frame with little force on the frame and the hinge parts. This little opening force enables to apply a relatively lightweight construction of the support frame portions 3,4 and its hinge parts 5,6. This light and flexible construction of a display device is a special advantage since this enables that, if the device falls down, the construction can absorb energy in an effective way and may prevent damage caused by falling.

The second embodiment of the display device 1 shown in Fig.2 is also a 'wrap' type device. Parts that correspond with the embodiment of fig.1 are indicated by the same reference numerals. In this embodiment the unlocking member comprises a slider 13 which is movably connected to the first locking part 9 by a pivot 14, extending substantially parallel to the pivot axis 11 in the connection of the part 9 with the second end 3a of the support frame. For unlocking the second end 3a from the device body 7 the slider 13 is movably guided at the frame portion 3 substantially in the length direction of the device body 7 (direction of arrow P). Due to this movement the slider 13 rotates the part 9 around the pivot axis 11 in anti-clockwise direction and causes the part 9 to come free from the part 10 thereby unlocking the second end 3a from the device body 7. The slider 13 is provided with a hook portion 13a enabling an easy manual unlocking. Preferably the slider 13 is spring loaded and moves after unlocking and opening of the support frame back to its original position on the frame portion 3, thus enabling a pivoting of the part 9 in clockwise direction and a good positioning of this part 9 for the next closing movement of the support frame.

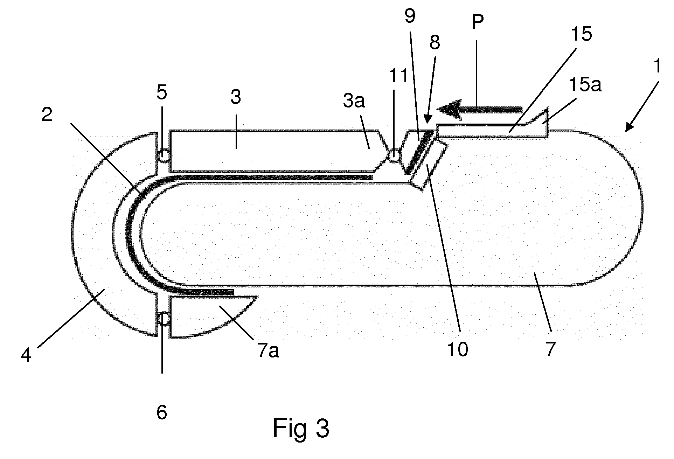

Also the third embodiment of the display device 1 shown in Fig.3 is a 'wrap' type device. Parts that correspond with the embodiments of fig.1 and 2 are indicated by the same reference numerals. In this embodiment the unlocking member comprises a slider 15 which is movable guided at the upper side of the device body 7 substantially in the length direction of the device body 7 (direction of arrow P). An upper corner of the part 9 is located in the path of movement of the slider 15. Due to this movement the slider 15 abuts the upper corner of the part 9, causing the part 9 to rotate around the pivot axis 11 in anti-clockwise direction, the part 9 coming free from the part 10 thereby unlocking the support frame from the device body 7. The slider 15 is provided with a hook portion 15a enabling an easy manual unlocking. Preferably the slider 15 is spring loaded and moves after unlocking and opening of the support frame back to its original position on the device body 7.

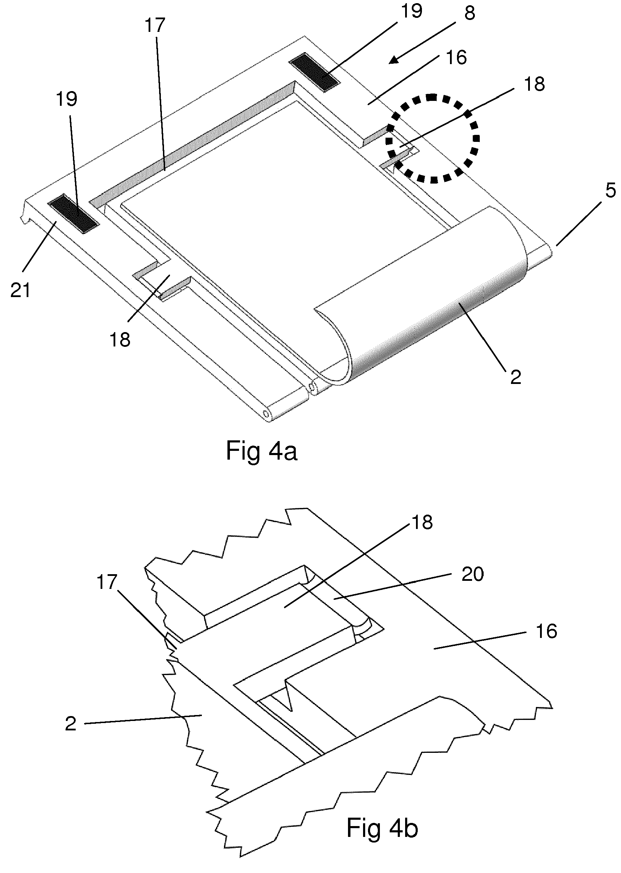

The fourth embodiment of the display device 1 shown in Fig.'s 4a and 4b is also a 'wrap' type device. Parts that correspond with the embodiments of fig.1, 2 and 3 are indicated by the same reference numerals. In this embodiment the first locking part is a U-shaped rim 16, neighboring a plate shaped end portion 17 of the support frame comprising the second support frame end portion. Both the U-shaped rim 16 and the plate shaped end portion 17 are connected via the hinge part 5 with the frame portion 4. The plate shaped end portion 17 supports a part of the flexible display 2 and substitutes the function of the frame portion 3 in the preceding embodiments. The U-shaped rim 16 is of a material, such as glass fiber reinforced plastics or aluminum, movable connected with the plate shaped end portion 17 via arms 18 extending substantially parallel to the hinges in the hinge parts 5,6. Important for the invention is that the rim 16 is substantially more stiff than the plate shaped end portion 17. Preferably the connection between the ends of the arms 18 and the rim 16 is configured with flexible movement damping material 20 such as soft rubber.
Thus the rim 16 can move (semi-) independently from the plate shaped end portion 17 with the attached part of the display 2. A side of the rim 16 is provided with one or more magnet(s) 19, which function is the same as the first locking part 9 in the preceding embodiments. For locking this first locking part 19 cooperates with a counterpart (not shown) located on the upper side of the device body 7 and together operate as magnetic closing means. By the relatively free movable connection in the embodiment of fig.4 of the locking part 19 with the support frame by means of the arms 18 at the end of the closing movement of the support frame around the body 7 the part 19 can find its optimal position with respect to the static counterpart. In this embodiment the unlocking member is a grip or hook portion 21 at the side of the rim 16 located opposite the side provided with the magnet(s) 19. Its unlocking functioning is comparable with the unlocking by the grip or hook portion 12 of the embodiment of fig.1.

The detailed drawings, specific examples and particular formulations given, serve the purpose of illustration only. Furthermore, other substitutions, modifications, changes, and omissions may be made in the design, operating conditions, and arrangement of the exemplary embodiments without departing from the scope of the invention as expressed in the appended claims.

## Claims

1. A display device (1) comprising:
a device body (7),
a continuous flexible display (2),
an elongated support frame (3, 4, 7a; 17) configured to support the flexible display (2), being provided with mutually movable connected frame portions and being hingeably connected at a first end (7a) to the device body (7) between a closed configuration for fixing the flexible display (2) in a wrapped storage position with respect to the device body (7) and an open configuration for fixing the flexible display (2) in an unwrapped open position,
**characterized in that** the display device (1) comprises magnetic closing means (8) being provided with a first locking part (9; 19) being movably connected to the support frame (3, 4, 7a; 17), said magnetic closing means (8) being capable of magnetically locking a second end (3a; 16) of the support frame in the closed configuration to the device body and being provided with at least one unlocking member (12; 13; 15; 21) enabling a manual unlocking of said second end (3a; 16) of the support frame (3, 4, 7a; 17) from the device body (7); wherein said first locking part (9; 19) is pivotably connected to the second end (3a) of the support frame (3, 4, 7a; 17), the pivot axis (11) of the connection being located substantially parallel to the hinge axis (5, 6) in the connection of the first end (7a) of the support frame (3, 4, 7a, 17) with the device body (7); or wherein said first locking part (9; 19) is connected by a ball hinge with the second end (3a) of the support frame (3, 4, 7a; 17); or wherein said first locking part (9; 19) is connected to the second end (3a) of the support frame (3, 4, 7a; 17) by flexible movement damping material (20) such as soft rubber.

2. The display device (1) according to claim 1, wherein the magneticclosing means (8) comprise locking parts (9, 10) of respectively magnetic and metal material for magnetically locking the second end (3a) of the support frame (3, 4, 7a; 17), wherein a second of these locking parts (9, 10) is connected with the device body (7).

3. The display device (1) according to any of the preceding claims, wherein the unlocking member is a slider (13, 15) movable relatively the device body (7).

4. The display device (1) according to claim 3, wherein for unlocking said second end (3a) of the support frame (3, 4, 7a, 17) from the device body (7) the slider (13) is movably connected to the first locking part (9, 19).

5. The display device (1) according to claim 3, wherein the first locking part (9, 19) is located in the path of movement of the slider (15) relatively to the device body (7), enabling that during movement the slider (15) abuts the first locking part (9, 19) and unlocks said second end (3a) of the support frame (3, 4, 7a, 17) from the device body.

6. The display device (1) according to any of the preceding claims, wherein the first locking part (19) is provided on a U-shaped rim (16) neighboring a plate shaped end portion (17) of the support frame, said U-shaped rim (16) being movably connected to said plate shaped end portion (17).

7. The display device (1) according to claim 6, wherein the U-shaped rim (16) is stiffer than the plate shaped end portion (17).

8. The display device (1) according to claim 7, wherein the connection between the U-shaped rim (16) and the plate shaped end portion (17) is configured by arms (18) extending substantially parallel to the hinge axis in the connection of the first end of the support frame (17) with the device body (7).

9. The display device (1) according to any of the preceding claims, wherein the unlocking member (12; 13; 15) comprises a grip portion (12; 13a; 15a).

## Patentansprüche

1. Anzeigevorrichtung (1), umfassend:
einen Vorrichtungskörper (7),
eine kontinuierliche flexible Anzeige (2),
einen verlängerten Stützrahmen (3, 4, 7a; 17), der konfiguriert ist, die flexible Anzeige (2) zu stützen, der mit gegenseitig beweglich verbundenen Rahmenabschnitten versehen ist und an einem ersten Ende (7a) klappbar mit dem Anzeigekörper (7) zwischen einer geschlossenen Konfiguration zum Fixieren der flexiblen Anzeige (2) in einer eingepackten Aufbewahrungsposition in Bezug auf den Anzeigekörper (7) und einer offenen Konfiguration zum Fixieren der flexiblen Anzeige (2) in einer an ausgepackten offenen Position verbunden ist,
**dadurch gekennzeichnet, dass** die Anzeigevorrichtung (1) eine magnetische Schließeinrichtung (8) umfasst, die mit einem ersten Verschlussteil (9; 19) versehen ist, das mit dem Stützrahmen (3, 4, 7a; 17) beweglich verbunden ist, wobei die magnetische Schließeinrichtung (8) fähig ist, ein zweites Ende (3 a; 16) des Stützrahmens in der geschlossenen Konfiguration mit dem Anzeigekörper magnetisch zu verriegeln und mit wenigstens einem Entriegelungselement (12; 13; 15; 21) versehen ist, das ein manuelles Entriegeln des zweiten Endes (3a; 16) des Stützrahmens (3, 4, 7a; 17) vom Vorrichtungskörper (7) ermöglicht; wobei das erste Verschlussteil (9; 19) mit dem zweiten Ende (3a) des Stützrahmens (3, 4, 7a; 17) drehgelenkig verbunden ist, wobei die Drehachse (11) der Verbindung im Wesentlichen parallel zur Scharnierachse (5, 6) in der Verbindung des ersten Endes (7a) des Stützrahmens (3, 4, 7a, 17) mit dem Vorrichtungskörper (7) positioniert ist; oder wobei das erste Verschlussteil (9; 19) durch ein Kugelscharnier mit dem zweiten Ende (3a) des Stützrahmens (3, 4, 7a; 17) verbunden ist; oder wobei das erste Verschlussteil (9; 19) mit dem zweiten Ende (3a) des Stützrahmens (3, 4, 7a; 17) durch flexibles Bewegung dämpfendes Material (20) wie beispielsweise weichen Gummi verbunden ist.

2. Anzeigevorrichtung (1) gemäß Anspruch 1, wobei die magnetischen Schließeinrichtungen (8) Verschlussteile (9, 10) aus magnetischem bzw. metallischem Material zum magnetischen Verriegeln des zweiten Endes (3 a) des Stützrahmens (3, 4, 7a; 17) umfassen, wobei ein zweites dieser Verschlussteile (9, 10) mit dem Vorrichtungskörper (7) verbunden ist.

3. Anzeigevorrichtung (1) gemäß einem der vorhergehenden Ansprüche, wobei Entriegelungselement ein Schieber (13, 15), der relativ zum Vorrichtungskörper (7) beweglich ist.

4. Anzeigevorrichtung (1) gemäß Anspruch 3, wobei der Schieber (13) zum Entriegeln des zweiten Endes (3a) des Stützrahmens (3, 4, 7a, 17) vom Vorrichtungskörper (7) beweglich mit dem ersten Verschlussteil (9, 19) verbunden ist.

5. Anzeigevorrichtung (1) gemäß Anspruch 3, wobei sich das erste Verschlussteil (9, 19) in der Bewegungsbahn des Schiebers (15) relativ zum Vorrichtungskörper (7) befindet, wodurch ermöglicht wird, dass der Schieber (15) während Bewegung an das erste Verschlussteil (9, 19) anstößt und das zweite Ende (3a) des Stützrahmens (3, 4, 7a, 17) vom Vorrichtungskörper entriegelt.

6. Anzeigevorrichtung (1) gemäß einem der vorhergehenden Ansprüche, wobei das erste Verschlussteil (19) auf einer U-förmigen Kante (16) bereitgestellt ist, die einem plattenförmigen Endabschnitt (17) des Stützrahmens benachbart ist, wobei die U-förmige Kante (16) mit dem plattenförmigen Endabschnitt (17) beweglich verbunden ist.

7. Anzeigevorrichtung (1) gemäß Anspruch 6, wobei die U-förmige Kante (16) steifer als der plattenförmige Endabschnitt (17) ist.

8. Anzeigevorrichtung (1) gemäß Anspruch 7, wobei die Verbindung zwischen der U-förmigen Kante (16) und dem plattenförmigen Endabschnitt (17) durch Arme (18) konfiguriert ist, die sich im Wesentlichen parallel zur Scharnierachse in der Verbindung des ersten Endes des Stützrahmens (17) mit dem Vorrichtungskörper (7) erstrecken.

9. Anzeigevorrichtung (1) gemäß einem der vorhergehenden Ansprüche, wobei das Entriegelungselement (12; 13; 15) ein Griffteil (12; 13a; 15a) umfasst.

## Revendications

1. Un dispositif d'affichage (1) comprenant :
un corps de dispositif (7),
un affichage flexible continu (2),
un cadre de support de forme allongée (3, 4, 7a; 17) configuré de façon à soutenir l'affichage flexible (2), qui est équipé de parties de cadre raccordées mutuellement déplaçables et raccordées par charnières au niveau d'une première extrémité (7a) au corps de dispositif (7) entre une configuration fermée destinée à la fixation de l'affichage flexible (2) dans une position de rangement enveloppée par rapport au corps de dispositif (7) et une configuration ouverte destinée à la fixation de l'affichage flexible (2) dans une position ouverte non enveloppée,
**caractérisé en ce que** le dispositif d'affichage (1) comprend un moyen de fermeture magnétique (8) qui est équipé d'une première partie de verrouillage (9, 19) qui est raccordée de manière mobile au cadre de support (3, 4, 7a; 17), ledit moyen de fermeture magnétique (8) étant capable de verrouiller magnétiquement une deuxième extrémité (3a; 16) du cadre de support dans la configuration fermée au corps de dispositif et qui est équipé d'au moins un élément de déverrouillage (12; 13; 15; 21) permettant un déverrouillage manuel de ladite deuxième extrémité (3a; 16) du cadre de support (3, 4, 7a; 17) du corps de dispositif (7), où ladite première partie de verrouillage (9; 19) est raccordée de manière pivotante à la deuxième extrémité (3a) du cadre de support (3, 4, 7a; 17), l'axe de pivot (11) du raccord étant placé sensiblement parallèlement à l'axe de charnière (5, 6) dans le raccord de la première extrémité (7a) du cadre de support (3, 4, 7a; 17) avec le corps de dispositif (7), ou où ladite première partie de verrouillage (9; 19) est raccordée par une charnière à rotule à la deuxième extrémité (3a) du cadre de support (3, 4, 7a; 17), ou où ladite première partie de verrouillage (9; 19) est raccordée à la deuxième extrémité (3a) du cadre de support (3, 4, 7a; 17) par un matériau d'amortissement de déplacement flexible (20) tel que du caoutchouc mou.

2. Le dispositif d'affichage (1) selon la Revendication 1, où le moyen de fermeture magnétique (8) comprend des parties de verrouillage (9, 10) de respectivement un matériau métallique et magnétique destinées au verrouillage magnétique de la deuxième extrémité (3a) du cadre de support (3, 4, 7a; 17), où une deuxième de ces parties de verrouillage (9, 10) est raccordée au corps de dispositif (7).

3. Le dispositif d'affichage (1) selon l'une quelconque des Revendications précédentes, où l'élément de déverrouillage est un coulisseau (13, 15) déplaçable par rapport au corps de dispositif (7).

4. Le dispositif d'affichage (1) selon la Revendication 3, où, afin de déverrouiller ladite deuxième extrémité (3a) du cadre de support (3, 4, 7a, 17) du corps de dispositif (7), le coulisseau (13) est raccordé de manière mobile à la première partie de verrouillage (9, 19).

5. Le dispositif d'affichage (1) selon la Revendication 3, où la première partie de verrouillage (9, 19) est placée dans le trajet de déplacement du coulisseau (15) par rapport au corps de dispositif (7), permettant que, au cours d'un déplacement, le coulisseau (15) vienne en butée contre la première partie de verrouillage (9, 19) et déverrouille ladite deuxième extrémité (3a) du cadre de support (3, 4, 7a, 17) du corps de dispositif.

6. Le dispositif d'affichage (1) selon l'une quelconque des Revendications précédentes, où la première partie de verrouillage (19) est installée sur une bordure en forme de U (16) voisine d'une partie d'extrémité en forme de plaque (17) du cadre de support, ladite bordure en forme de U (16) étant raccordée de manière mobile à ladite partie d'extrémité en forme de plaque (17).

7. Le dispositif d'affichage (1) selon la Revendication 6, où la bordure en forme de U (16) est plus rigide que la partie d'extrémité en forme de plaque (17).

8. Le dispositif d'affichage (1) selon la Revendication 7, où le raccord entre la bordure en forme de U (16) et la partie d'extrémité en forme de plaque (17) est configuré par des bras (18) s'étendant sensiblement parallèlement à l'axe de charnière dans le raccord de la première extrémité du cadre de support (17) au corps de dispositif (7).

9. Le dispositif d'affichage (1) selon l'une quelconque des Revendications précédentes, où l'élément de déverrouillage (12; 13; 15) comprend une partie de préhension (12; 13a; 15a).
